Europäisches Patentamt

European Patent Office

Office européen des brevets

(19)

(11) **EP 1 239 394 A2**

(12) **DEMANDE DE BREVET EUROPEEN**

(43) Date de publication:
**11.09.2002 Bulletin 2002/37**

(51) Int Cl.7: **G06F 17/60**

(21) Numéro de dépôt: **02290343.9**

(22) Date de dépôt: **12.02.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **23.02.2001 FR 0102524**

(71) Demandeur: **FRANCE TELECOM**
**75015 Paris (FR)**

(72) Inventeurs:
• **Bouron, Thierry**
**78700 Conflans Ste Honorine (FR)**

• **Latourette, Mathieu M.**
**34090 Montpellier (FR)**
• **Sallantin, Jean M.**
**34070 Montpellier (FR)**

(74) Mandataire: **Lapoux, Roland M.**
**Cabinet Martinet & Lapoux,**
**43 Boulevard Vauban,**
**B.P. 405,**
**Guyancourt**
**78055 Saint Quentin Yvelines Cedex (FR)**

(54) **Assistance au choix d'un produit dans un catalogue électronique de produits**

(57) Pour choisir un produit dans un ensemble électronique de produits (EP) depuis un terminal dans un système interactif, les étapes itératives suivantes sont exécutées. L'ensemble de produits (EP) est décomposé (ET8) en des catégories de produits (C1-CI) en dépendance de préférences sur des attributs de produits afin d'y identifier des produits comme représentants (RP1-RPI) des catégories, et un représentant (RPi) est sélectionné (ET9) pour exécuter l'une des étapes suivantes si le représentant sélectionné n'est pas pris (ET16) : suppression (ET10, ET11, ET12) de la catégorie (Ci) correspondante au représentant sélectionné (RPi) dans l'ensemble de produits afin d'appliquer la décomposition (ET8) à l'ensemble de produits ainsi réduit ; et choix (ET13, ET14, ET15) de la catégorie (Ci) correspondante au représentant sélectionné pour réduire l'ensemble de produits à la catégorie correspondante afin d'appliquer la décomposition à la catégorie correspondante.

FIG.2

## Description

La présente invention concerne un procédé pour assister un usager à choisir un produit parmi un catalogue électronique de produits depuis un terminal de consultation dans un système de traitement interactif de données.

Un "produit" au sens de l'invention est un article, un objet, un bien ou un service proposé ou commercialisé par une entreprise.

Dans les services en ligne, quatre principaux procédés existent actuellement pour rechercher un produit en fonction des choix et préférences d'un usager dans un catalogue de produits.

Un premier procédé, initialement utilisé pour les annuaires de services tels que les annuaires téléphoniques professionnels, définis une arborescence de catégories ou de thèmes afin de cibler le choix. Par exemple, la recherche d'un produit tel qu'un ordinateur est effectué en choisissant la catégorie "ordinateurs" puis la catégorie "ordinateurs de bureau", puis une catégorie correspondant à la marque désirée d'ordinateurs de bureau, puis à une catégorie correspondant au microprocesseur disponible dans les ordinateurs de bureau de la marque désirée, etc. L'usager obtient ainsi une dizaine de propositions parmi lesquelles il effectue son choix.

Selon ce premier procédé, l'ordre des choix est, notamment, imposé à l'usager. Pour obtenir un ordinateur ayant un coût inférieur à un montant prédéterminé, l'usager doit consulter l'ensemble du catalogue d'une marque, puis sélectionner un microprocesseur avant d'obtenir des propositions de prix, qui peuvent être trop chères. Plus généralement, les produits d'une catégorie finale sont tous similaires, en l'occurrence présentent la même marque et le même microprocesseur. Par conséquent l'usager ne veut pas comparer les différentes offres de produit affichées sur l'écran de son terminal.

Un deuxième procédé catégorise les produits selon des types de profils du type d'usagers. L'usager choisit la catégorie correspondant à son profil. Par exemple pour choisir un forfait de radiotéléphone mobile, un usager identifie son profil comme un "jeune cadre dynamique" correspondant à un usage professionnel intensif, ou comme un "père de famille" souhaitant être appelé à tout moment par sa famille, ou bien encore comme un usager moyen, etc. Un certain nombre de produits issus d'études de marché ont été présélectionnés pour répondre aux besoins d'une catégorie d'usagers En fait, ce deuxième procédé consiste à reprendre une catégorisation ou à la créer.

Le deuxième procédé réduit l'inconvénient du premier procédé, en introduisant des catégories correspondant plus aux besoins de l'usager et regroupant des produits sensiblement différents. Par contre, le deuxième procédé ne fournit pas d'aide à l'usager pour comprendre les différentes offres proposées, c'est-à-dire leurs avantages et leurs faiblesses. Comme on le verra ci-dessous, cet inconvénient est commun aux quatre procédés selon la technique antérieure.

Un troisième procédé invite l'usager à remplir un formulaire exprimant ses besoins ou préférences. Les produits sont ordonnés en fonction des réponses de l'usager. Ce troisième procédé peut consister simplement en une recherche de produits dans une base de données, par exemple en sélectionnant tous les ordinateurs ayant un coût inférieur à un montant déterminé.

Le troisième procédé nécessite de savoir précisément le produit que l'on veut. Il aide à déterminer un produit mais n'aide pas à choisir entre des produits. Le troisième procédé nécessite la création préalable de formulaires adaptés aux types de produits considérés et de processus analysant les réponses d'usager pour ordonner les produits. Ce troisième procédé est donc relativement complexe puisque, en outre, la combinaison des préférences d'un usager et leur interprétation n'est pas simple. Par exemple, le coût et la puissance d'une chaîne haute fidélité sont des caractéristiques pertinentes pour de nombreux usagers, et le compromis entre ces deux caractéristiques est propre à chaque usager. Un usager peut préférer une chaîne de 50 W à 150 € et un autre usager une chaîne de 60 W à 170 €. La détermination de l'importance relative à accorder aux deux préférences à partir d'un formulaire est alors un problème complexe à résoudre. Une fois un compromis choisi, les offres sélectionnées risquent de toutes se ressembler.

Un quatrième procédé représente des produits et des préférences d'usagers par des vecteurs pondérés et effectue des correspondances entre ces vecteurs. Les vecteurs pondérés reposent généralement sur des mots-clés représentatifs de chaque produit ou de chaque préférence auxquels sont attribués des poids. La détermination des poids est un problème délicat.

Le quatrième procédé nécessite de capturer préalablement l'information personnelle précise sur les préférences de l'usager. Ce quatrième procédé aboutit à la sélection d'un catalogue de produits correspondant plus ou moins aux préférences, mais ne permet d'expliquer cette sélection et d'y associer l'usager. En outre, ce procédé, comme le précédent, est concentré sur un type de possibilité et ne propose pas plusieurs possibilités réellement différentes.

La présente invention vise à fournir une assistance au choix d'un produit parmi plusieurs, n'offrant pas les inconvénients des procédés précédents, en définissant itérativement et dynamiquement des catégories de produit, sans intervention de l'usager, au fur et à mesure de choix de catégorie de produits et de choix de critères de produits.

A cette fin, un procédé d'assistance au choix d'un produit dans un ensemble électronique de produits mémorisé dans un moyen serveur interagissant avec un terminal, chaque produit étant défini par plusieurs attributs, est caractérisé en ce qu'il comprend la suite itérative des étapes suivantes :

- décomposer par le moyen serveur l'ensemble électronique de produits en un nombre prédéterminé de catégories de produits afin que le serveur identifie des produits respectivement comme représentants des catégories, et
- sélectionner dans le terminal l'un des représentants pour commander l'exécution de l'une des étapes suivantes dans le moyen serveur si le représentant sélectionné n'est pas pris :

   supprimer la catégorie correspondant au représentant sélectionné dans l'ensemble de produits afin que le moyen serveur applique l'étape de décomposer à l'ensemble de produits ainsi réduit si celui-ci n'est pas restreint à une catégorie non décomposable ; et
   choisir la catégorie correspondant au représentant sélectionné pour réduire l'ensemble de produits à la catégorie correspondante afin que le moyen serveur applique l'étape de décomposer à la catégorie correspondante si celle-ci n'est pas restreinte au représentant sélectionné.

Dans le procédé de l'invention, un "produit" est la représentation numérique codée d'un produit ou d'un service commercialisé par une entreprise, laquelle représentation numérique codée est enregistrée dans le moyen serveur.
La catégorisation selon le procédé de l'invention repose sur des préférences exprimées par un usager et sur des attributs de produits prédéterminés.
Plus précisément, la suite itérative d'étapes peut comprendre, en outre, les étapes suivantes :

- sélectionner l'un des attributs pour exécuter l'une des étapes suivantes :

   ordonner par ordre de préférence les valeurs de l'attribut sélectionné afin de décomposer l'ensemble restant de produits en un nombre de catégories dépendant notamment respectivement de l'ordre de préférence des valeurs de l'attribut ;
   modifier un ordre de préférence des valeurs de l'attribut sélectionné afin de décomposer l'ensemble restant de produits en fonction de l'ordre de préférence modifié des valeurs de l'attribut ; et
   supprimer un ordre de préférence de valeurs déjà ordonnées de l'attribut sélectionné afin de décomposer l'ensemble de produits restant en fonction notamment d'ordres de valeurs d'autres attributs antérieurement sélectionnés.

L'usager participe ainsi à la catégorisation et a la possibilité de modifier ou d'enrichir ses préférences à tout moment, notamment lorsque des catégories lui semblent équivalentes. Comparativement aux procédés selon la technique antérieure, l'invention rend avantageusement explicite les différentes offres de produit présentées à l'usager en donnant un aspect ludique à la consultation. L'invention ne consiste pas à remplir un long questionnaire, et impose que l'usager fasse confiance à l'établissement des catégories et à la détermination des représentants de ces catégories chaque fois qu'il doit choisir entre différents représentants de catégorie.
Selon une première réalisation, l'étape de décomposer par le moyen serveur un ensemble de produits en un nombre prédéterminé de catégories comporte une détermination de premiers produits comme pivots dans l'ensemble de produits, une évaluation de paramètres de similarité entre chaque produit de l'ensemble et les pivots afin de déterminer le pivot le plus similaire audit chaque produit et ranger ledit chaque produit dans la catégorie associée au pivot le plus similaire, et une détermination du barycentre dans chaque catégorie afin d'en déduire le produit le plus similaire du barycentre en tant que représentant de la catégorie, et réitérer l'évaluation de paramètres et la détermination de barycentre tant que les représentants considérés comme pivots des catégories ne convergent pas à une incertitude prédéterminée près. Le paramètre de similarité entre chaque produit et un pivot peut être la distance euclidienne dépendant des attributs de ceux-ci.
Selon une deuxième réalisation, l'étape de décomposer par le moyen serveur un ensemble de produits en un nombre prédéterminé de catégories comporte une détermination de premiers produits comme pivots dans l'ensemble de produits, une détermination du voisinage de chaque pivot par rapport à des couples d'au moins une partie de l'ensemble de produits, une détermination du voisinage de chaque produit autre que les pivots par rapport à des couples d'au moins une partie de l'ensemble de produits, une évaluation de similarités entre chaque produit de l'ensemble et les pivots afin de déterminer le pivot le plus similaire audit chaque produit et ranger ledit chaque produit dans la catégorie associée au pivot le plus similaire, et une détermination du voisinage de chaque produit dans chaque catégorie afin d'en déduire le produit ayant le plus grand voisinage dans chaque catégorie en tant que représentant de la catégorie, et réitérer la détermination de voisinage de chaque pivot en tant que représentant, la détermination du voisinage de chaque produit, l'évaluation de similarités et la détermination du plus grand des voisinages dans chaque catégorie, tant que les représentants considérées comme pivots des catégories ne convergent pas à une incertitude prédéterminée près.

L'invention concerne également un système d'assistance au choix d'un produit dans un ensemble électronique de produits comprenant un moyen serveur interagissant avec un terminal et ayant mémorisé l'ensemble électronique de produits, chaque produit étant défini par plusieurs attributs pour la mise en oeuvre du procédé selon l'invention. Le système est caractérisé en ce qu'il comprend :

- un moyen pour décomposer l'ensemble électronique de produits en un nombre prédéterminé de catégories de produits,
- un moyen pour identifier des produits respectivement comme représentants des catégories,
- un moyen répondant à une sélection dans le terminal de l'un des représentants si le représentant sélectionné n'est pas pris, pour supprimer la catégorie correspondant au représentant sélectionné dans l'ensemble de produits afin que le moyen pour décomposer décompose l'ensemble de produits ainsi réduit en d'autres catégories si celui-ci n'est pas restreint à une catégorie non décomposable ; et
- un moyen répondant à une sélection dans le terminal de l'un des représentants si le représentant sélectionné n'est pas pris, pour choisir la catégorie correspondant au représentant sélectionné pour réduire l'ensemble de produits à la catégorie correspondante afin que le moyen pour décomposer décompose la catégorie correspondante en d'autres catégories si celle-ci n'est pas restreinte au représentant sélectionné.

Le système présente également d'autres caractéristiques énoncées dans les revendications 10 à 13.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme schématique d'un système de traitement interactif de données pour la mise en oeuvre du procédé d'assistance au choix d'un produit selon une vérification préférée de l'invention ;
- la figure 2 est un algorithme d'étapes itératives du procédé d'assistance au choix d'un produit selon l'invention ;
- les figures 3, 4 et 5 sont des tableaux des attributs de produits représentatifs de catégories, inclus dans des pages affichées sur un terminal du système interactif ;
- la figure 6 est un graphe de produits en fonction des valeurs de deux attributs ;
- la figure 7 est un algorithme de décomposition d'ensemble de produits en des catégories selon une première réalisation ; et
- la figure 8 est un algorithme de décomposition d'ensemble de produits en des catégories selon une deuxième réalisation.

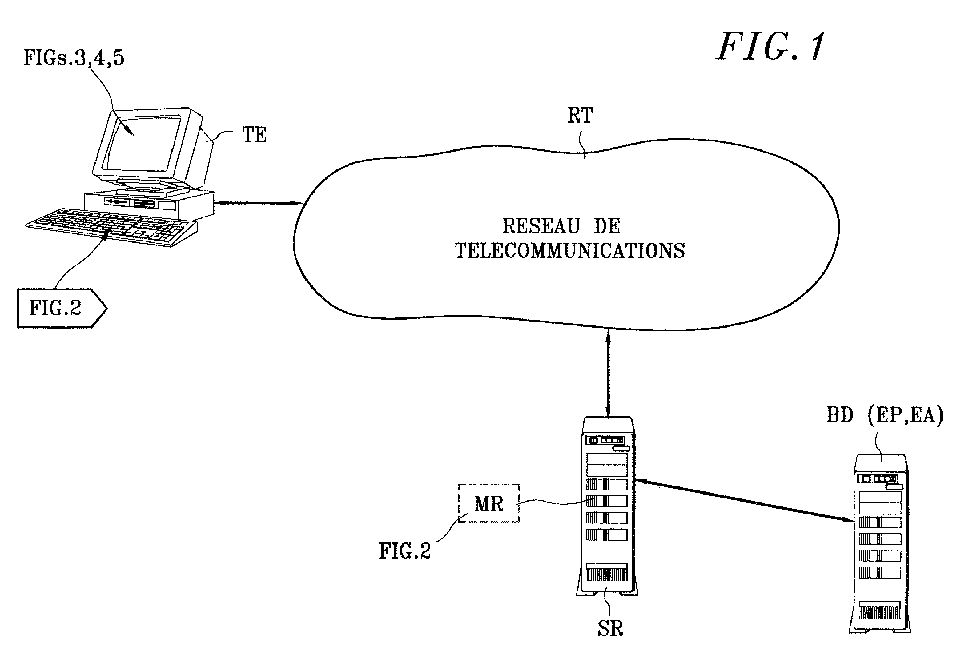

En référence à la figure 1, un système de traitement interactif de données comprend d'une manière connue un terminal d'usager TE, un serveur de données SR et un réseau de télécommunications RT reliant le terminal TE au serveur SR. D'une manière générale le réseau de télécommunications RT est de n'importe quel type de réseau de télécommunications ou de téléinformatique et peut être l'un ou plusieurs combinés des réseaux suivants : réseau radiophonique, réseau téléphonique commuté, réseau numérique à intégration de services RNIS, réseau à haut débit de type ATM, réseau de transmission par paquets, réseau intranet, réseau internet, etc.

Par exemple le réseau de télécommunications RT est constitué essentiellement du réseau internet dans lequel le terminal TE est un client doté d'un navigateur et le serveur SR comprend notamment une application pour la consultation en ligne de catalogues de produits et particulièrement un moteur de recherche MR de produits mettant en oeuvre le procédé d'assistance au choix de produit selon l'invention. Le serveur SR donne accès à au moins un serveur BD dans lequel des bases de données correspondant à des catalogues de produits sont installées. Les serveurs SR et BD qui peuvent être réunis en un seul serveur, constituent un moyen serveur selon l'invention. Dans le cas d'une gestion des produits par un Système de Gestion de base de Données SGBD, les attributs décrivant les produits sont un sous-ensemble des champs enregistrés dans la base de données. Une communication depuis le terminal TE avec le serveur SR est établie selon un protocole connu, avec authentification mutuelle du terminal TE et du serveur SR et échange de requêtes et réponses. Le dialogue établi entre le terminal TE et le serveur SR est par exemple développé sous le langage Java, après chargement d'une applet correspondante dans le terminal TE. Le dialogue au niveau de l'interface d'usager dans le terminal TE est effectué principalement par l'intermédiaire de pages d'hypertexte affichées sur l'écran du terminal, ou par un script tel qu'une applet.

Le terminal TE peut être par exemple un ordinateur personnel, une station de travail, ou un radiotéléphone portable, ou un assistant personnel numérique PDA, ou bien encore une borne installée en libre service dans un lieu public.

En variante, le serveur SR peut constituer un portail dans lequel le moteur de recherche MR est appliqué à un grand nombre de base de données BD.

Selon une autre variante, le serveur SR et le terminal TE peuvent être réunis en un terminal dédié à l'invention.

Les définitions des termes suivants sont utilisées dans la description du procédé d'assistance selon l'invention :

- Produit : article, objet, bien ou service dans un catalogue constituant un ensemble de produits ;
- Attribut : propriété attribuée à un produit et participant à la description du produit ;
- Valeur : nombre évaluant un attribut ou symbole ordonnable qualifiant un produit ;
- Domaine d'un attribut : ensemble de toutes les valeurs prises par un attribut sur tous les produits du catalogue ;
- Préférences sur un attribut : ordre total ou partiel entre les valeurs du domaine d'un attribut ;
- Usager : personne recherchant dans le catalogue un produit l'intéressant ;
- Moteur de recherche MR : outil informatique mettant en oeuvre le procédé de l'invention pour effectuer une recherche de produit demandé par un usager ;
- Catégorie : ensemble de produits appartenant au catalogue et ayant un ou plusieurs attributs dont les valeurs sont voisines ; et
- Représentant : produit catégoriel, représentatif d'une catégorie.

Initialement à une étape E0, la base de données contient au moins un catalogue de produits constituant un ensemble EP de produits de M produits P1, ... Pm,... PM correspondant à un ensemble EA d'attributs A1,... An,... AN. Un ensemble de préférences EV est initialement vide.

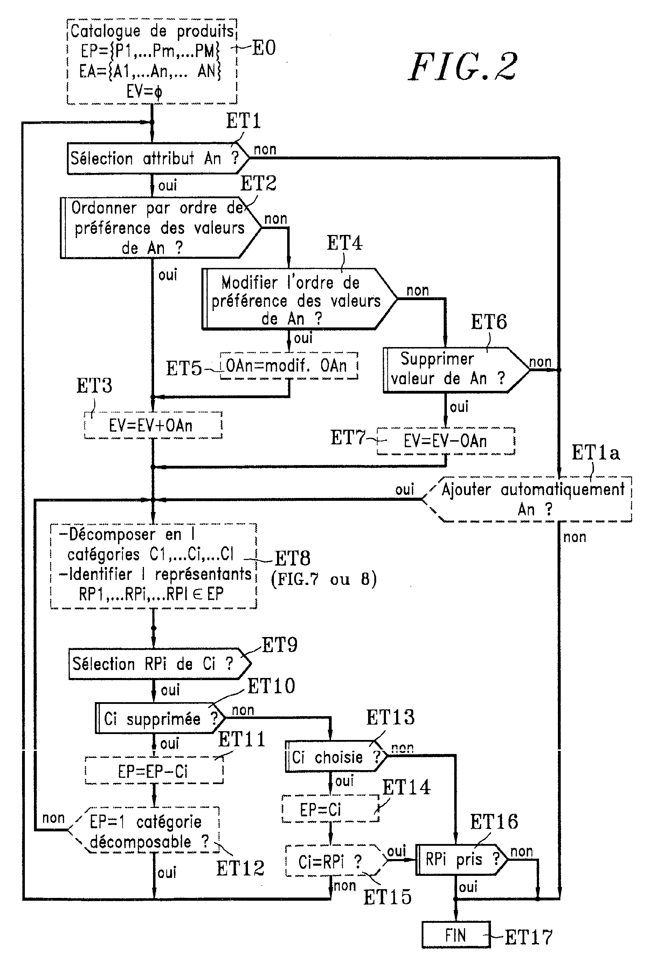

Comme montré à la figure 2, le procédé d'assistance comprend essentiellement deux groupes d'étapes ET1 à ET7 et ET9 à ET16 relatives à deux possibilités itératives d'interaction offertes à un usager à tout instant. Ces deux possibilités d'interaction concernent une sélection de l'un An des attributs et l'expression de préférences sur cet attribut, et une sélection ou un rejet de l'une Ci des catégories résultant de la décomposition de l'ensemble des produits EP à une étape intermédiaire ET8.

Dans la figure 2, les étapes illustrées par un cadre en traits pointillés sont exécutées par le moteur de recherche MR dans le serveur SR, et les autres étapes illustrées par un cadre en trait plein sont commandées depuis l'interface d'usager dans le terminal TE. En particulier les étapes illustrées par un cadre dont le côté est formé par un double trait correspondent à des boutons affichés constituant des liens dynamiques dans les réponses de l'usager transmise par le terminal TE au moteur de recherche MR.

Bien que l'invention soit décrite ci-après par rapport à des étapes de procédé, les étapes particulièrement exécutées dans le serveur SR correspondent respectivement à des moyens fonctionnels techniques qui combinés forment un moyen serveur propre à l'invention.

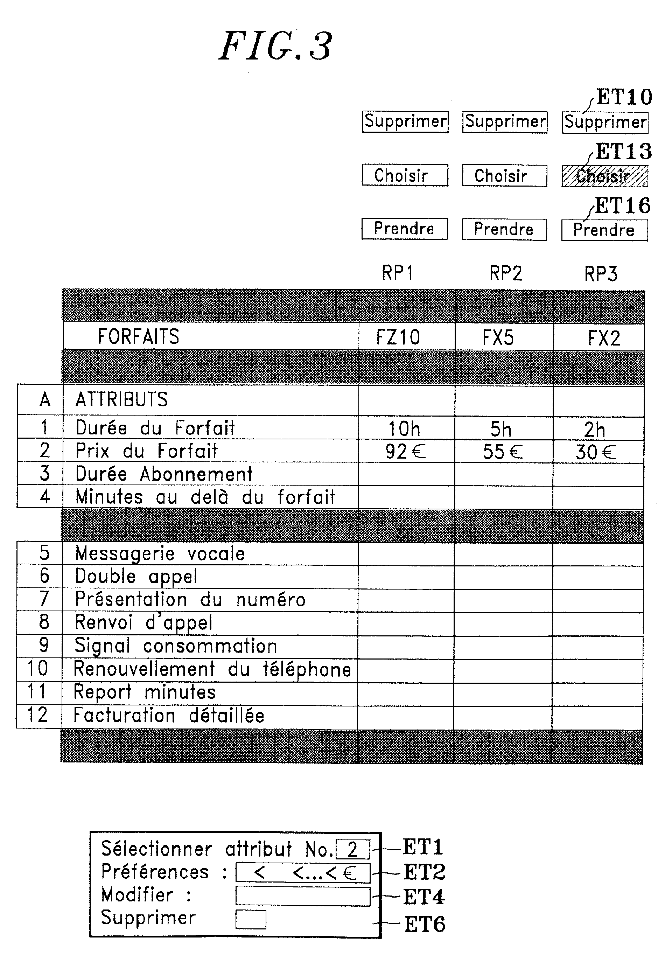

A titre d'exemple montré aux figures 3, 4 et 5, le catalogue électronique de produits concerne un catalogue de forfaits de radiotéléphone cellulaire mobile offerts par trois opérateurs X, Y et Z dont les forfaits téléphoniques sont désignés respectivement par FX, FY et FZ suivis d'un numéro. Les produits offerts constitués par des représentants de catégories déterminées par le moteur de recherche MR sont représentés à l'écran du terminal TE sous la forme d'un tableau dont les colonnes correspondent aux forfaits et dont les lignes correspondent aux attributs des forfaits constituant les produits. L'intersection d'une ligne et d'une colonne dans le tableau est matérialisée par une case pouvant contenir la valeur associée à l'attribut de la ligne respective pour le produit de la colonne respective. Ainsi par exemple, les attributs sont la durée, le prix, le nombre de minutes d'un forfait, qui sont exprimés par un nombre d'heures, une monnaie, etc., ou bien par la présence ou l'absence de certaines options dont la valeur peut être exprimée par un "0" ou un "1" ou bien par "non" ou "oui".

Selon un autre exemple, les produits peuvent être des pièces mécaniques et les attributs des propriétés physiques de ces pièces, afin d'assister la sélection de ces pièces en fonction par exemple de leurs dimensions et/ou des matières les constituant et/ou de coefficients ou paramètres mesurés. Selon un exemple particulier, le procédé de l'invention assiste au choix d'un pneu en fonction du poids, de l'empâtement, de la vitesse moyenne d'utilisation et de la catégorie (tourisme, utilitaire ou tout terrain) d'un véhicule, indépendamment de tout attribut économique, tel que prix.

Plus généralement, le procédé de l'invention est indépendant de la nature des produits et de leurs attributs, et n'est donc pas limité à l'exemple de forfaits de radiotéléphone auquel on se référera ci-après.

Au début de l'ensemble des étapes itératives ET1 à ET16, l'un An des attributs de l'ensemble EA non encore sélectionné peut être sélectionné à l'étape ET1. Sinon le procédé est terminé à une étape ET17.

En variante, comme montré à une étape ET1a, l'usager peut choisir de commander au moteur de recherche MR une sélection de l'un des attributs selon l'une des étapes ET2, ET4 ou ET6, ou une sélection aléatoire d'un attribut An non encore sélectionné, ou bien encore une sélection de l'un des attributs restants qui est statistiquement le plus sélectionné par les usagers. Après l'étape ET1a, le procédé va directement à l'étape ET8 décrite plus loin.

La sélection d'un attribut An à l'étape ET1 se traduit au niveau de l'interface d'usager dans le terminal TE par l'une des trois étapes ET2, ET4 et ET6, comme illustré au bas des figures 3 à 5.

L'étape ET2 invite l'usager à ordonner par ordre de préférence OAn les valeurs de l'attribut An, en général en nombre inférieur à 10. L'étape suivante ET3 additionne les valeurs ordonnées OAn de l'attribut An sélectionnées de préférence par l'usager à l'ensemble des préférences EV.

Selon l'exemple précité, une préférence pour une durée de forfait A1 longue se traduit par l'ordre de préférence suivant OA1 : 1h30 < 2h < 2h30 < 5h < 10h < 15h où les valeurs 1h30, 2h, 2h30, 5h, 10h et 15h constituent le domaine de l'attribut "durée du forfait", $A1_{min}$ = 1h30 et $A1_{max}$ = 15h étant le minimum et le maximum de l'attribut A1. Selon un autre exemple, l'ordre de préférence retenu pour l'attribut A2 "prix" peut être le suivant : 131 € > 92 € > 55 € > 36 € > 30 € > 24 € .

Typiquement ces ordres de préférence sont obtenus en demandant aux consommateurs d'attribuer une note à chaque valeur Vj de l'attribut sélectionné An. Par exemple la note 1 est attribuée pour la durée de 1h30, 2 pour 2h, 3 pour 2h30, 4 pour 5h, 5 pour 10h, et 6 pour 15h. L'ordre de préférence entre durée de forfait est alors l'ordre croissant sur ces nombres. En variante plus simple, ces ordres de préférence sont pré-établis par le moteur de recherche MR ; dans cette variante, la sélection d'un attribut implique l'acception de l'ordre de préférence pré-établi par le moteur de recherche, ou est restreinte à l'alternative entre l'ordre croissant et l'ordre décroissant des valeurs proposées de l'attribut An.

Si un ordre de préférence OAn a déjà été sélectionné pour l'attribut An à une étape antérieure ET2, l'usager modifie l'ordre de préférence des valeurs de l'attribut An à l'étape ET4, ou en variante ajoute ou supprime au moins une valeur dans l'ordre précédent. Le moteur de recherche MR remplace l'ordre précédent par le nouvel ordre de valeurs de l'attribut An à l'étape ET5 et l'introduit dans l'ensemble de préférences EV à l'étape ET3.

Si aucun ordre de préférence OAn de l'attribut An n'est pas ajouté ou modifié aux étapes ET2 et ET4, l'usager peut supprimer l'ordre de préférence antérieur de l'attribut An s'il existe, à l'étape ET6. Le moteur de recherche MR retire alors l'ordre de préférence OAn de l'ensemble de préférences EV à l'étape ET7.

Après l'une des étapes ET3 et ET7, ou après l'étape optionnelle ET1a, le procédé passe à l'étape de décomposition ET8. Si aucune des étapes ET2, ET4 et ET6 n'est sélectionnée, ou si aucun attribut An n'est sélectionné à l'étape ET1, sans passage par l'étape optionnelle ET1a, le procédé est terminé à l'étape ET17.

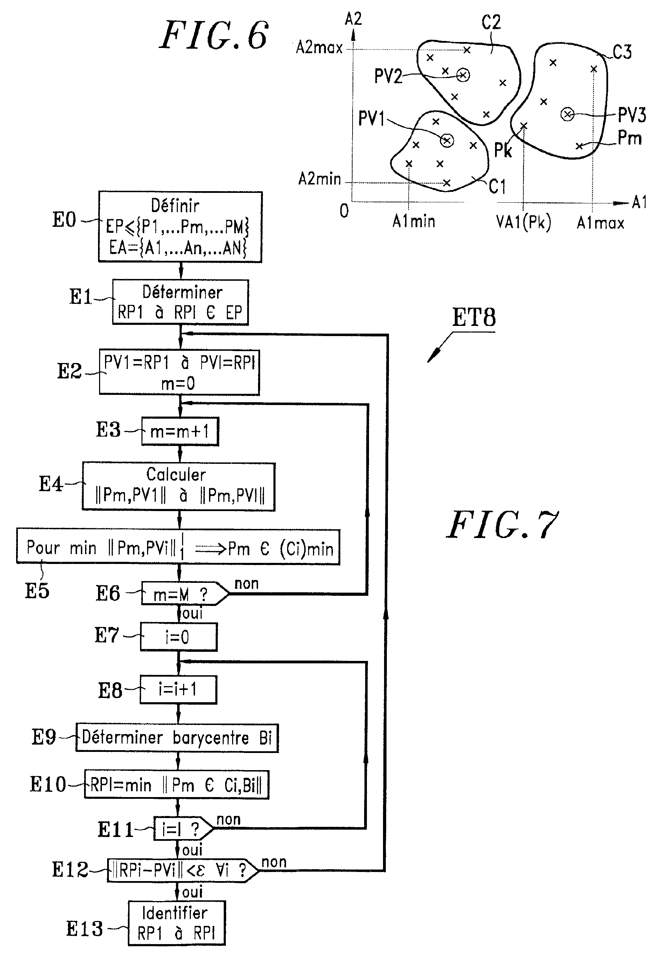

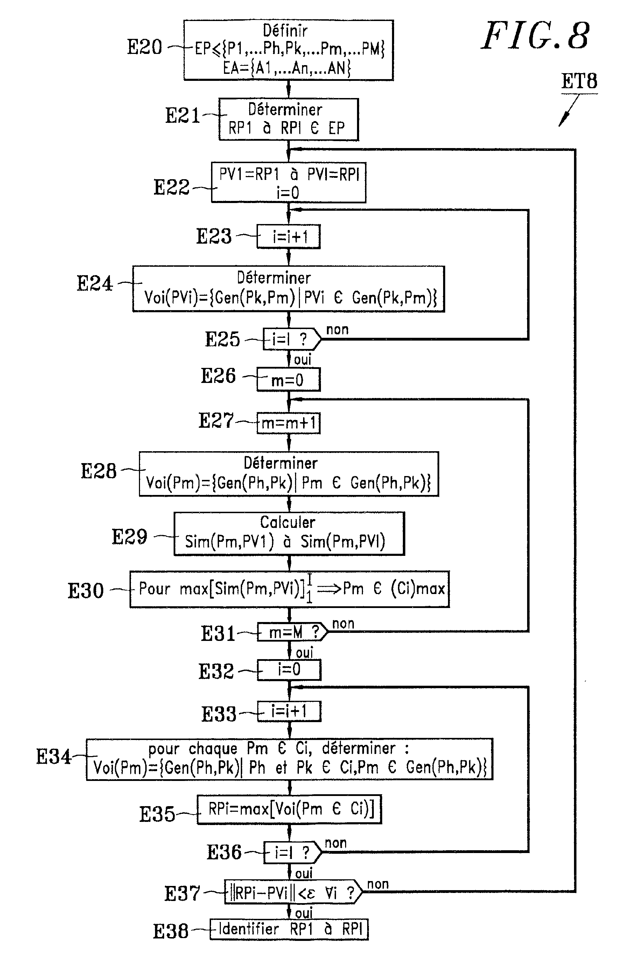

Lors de la première exécution de l'étape ET8, le moteur de recherche MR considère tous les produits contenus dans l'ensemble EP précédemment défini et le décompose en I catégories de produits C1,... Ci,... CI selon l'une des deux réalisations de décomposition d'ensemble de produits décrites plus loin en référence aux figures 7 et 8. Pour chacune des catégories C1 à CI, le moteur de recherche MR identifie un représentant respectif RP1 à RPI et le transmet avec au moins ses attributs sélectionnés au terminal TE pour l'afficher.

Selon l'exemple des forfaits téléphoniques, et après que l'usager est exprimé par deux fois à l'étape ET2 ses préférences selon les valeurs de durée de forfait et les valeurs de prix indiquées ci-dessus, le terminal TE affiche le tableau montré à la figure 3 :

- un forfait FZ10 correspondant au représentant RP1 de la première catégorie C1 pour une durée de dix heures et un prix de 92 € ;
- le forfait FX5 correspondant au représentant RP2 de la deuxième catégorie C2 pour une durée de cinq heures et un prix de 55 € ; et
- le forfait FX2 correspondant au représentant RP3 de la troisième catégorie C3 pour une durée de deux heures et un prix de 30 € .

A l'étape suivante ET9, l'usager choisit le représentant RPi de l'une Ci des catégories C1 à CI qu'il décide de supprimer, ou de choisir pour une décomposition ultérieure de la catégorie, ou de prendre plus simplement, en cliquant sur l'un des trois boutons correspondants situés au-dessus de la colonne du représentant sélectionné, comme montré à la figure 3, à l'une des étapes ET10, ET13 et ET16.

Si à l'étape ET10 la catégorie Ci correspondant au représentant sélectionné RPi doit être supprimée, le moteur de recherche MR élimine la catégorie Ci de l'ensemble courant de produits EP à l'étape ET11. Si à l'étape suivante ET12, l'ensemble de produits EP n'est pas restreint à une catégorie décomposable en d'autres catégories, qui peut être constituée de trois produits selon l'exemple précité, le moteur de recherche revient à l'étape de sélection d'attribut ET1 qui peut être suivie directement par l'étape ET8. Sinon, lorsque l'ensemble de produits EP est réduit à une catégorie non décomposable résultant de la décomposition de l'ensemble EP à la dernière étape ET8, le procédé passe de l'étape ET12 à l'étape ET9 de manière à obliger l'usager à choisir la catégorie restante et éventuellement à prendre le représentant de la catégorie restante.

Si l'usager a décidé de choisir le représentant RPi de la catégorie Ci qui est le plus proche de ses besoins à l'étape ET13, le moteur de recherche MR élimine les autres catégories C1 à C(i-1) et C(i+1) à CI de l'ensemble EP qui est réduit à la catégorie Ci à l'étape ET14. Si à l'étape suivante ET15, le moteur de recherche constate que la catégorie Ci n'est pas réduite à un seul produit constitué par son représentant RPi, le procédé retourne à l'étape ET1.

Si la catégorie sélectionnée Ci est réduite à son représentant RPi à l'étape ET15, ou bien si l'usager a retenu directement le représentant RPi comme un produit satisfaisant ses besoins à l'étape ET16, le moteur de recherche MR invite l'usager à confirmer son choix sur le produit RPi, par exemple par une procédure d'achat. Que cet achat soit effectué ou non, le procédé se termine ensuite à l'étape ET17.

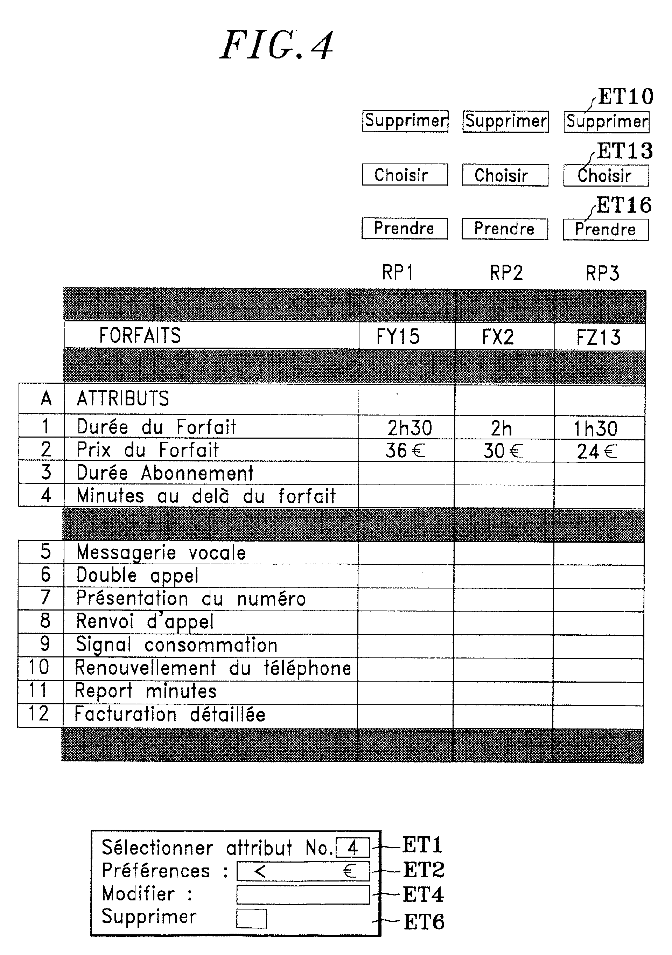

Selon l'exemple des forfaits téléphoniques, l'usager a par exemple sélectionné le forfait FX2 dans la troisième colonne du tableau de la figure 3, en cliquant sur le bouton "Choisir" au-dessus de cette colonne, à l'étape ET13. Le moteur de recherche élimine les autres catégories correspondant aux deux autres forfaits FZ10 et FX5 à l'étape ET14, et après passage à travers l'étape ET1a si l'usager n'a pas décidé de sélectionner un nouvel attribut à l'étape ET1, le moteur de recherche décompose la catégorie Ci en I = 3 autres catégories parmi l'ensemble restant EP = Ci. Après l'étape ET8, le terminal affiche le tableau montré à la figure 4. Les trois représentants proposés RP1, RP2 et RP3 dans le tableau de la figure 4 correspondent aux forfaits suivants d'environ 2 heures :

- le forfait FY15 de 2h30 pour 36 € ;
- le forfait FX2 de 2h pour 30 € ; et
- le forfait FZ13 de 1h30 pour 24 € .

Lorsque l'usager estime que les représentants de catégorie proposés lui semblent équivalents, l'usager essaie de les distinguer en introduisant de nouvelles préférences à l'étape ET2, ou en modifiant des préférences précédentes à l'étape ET4. Par exemple, l'usager sélectionne le quatrième attribut A4 correspondant au prix de la minute au-delà du forfait, à l'étape ET2. Le moteur de recherche ajoute cette dernière préférence à l'ensemble EV, à l'étape 3 afin de décomposer l'ensemble de produits EP en trois catégories, chaque produit étant défini par trois attributs A1, A2 et A4.

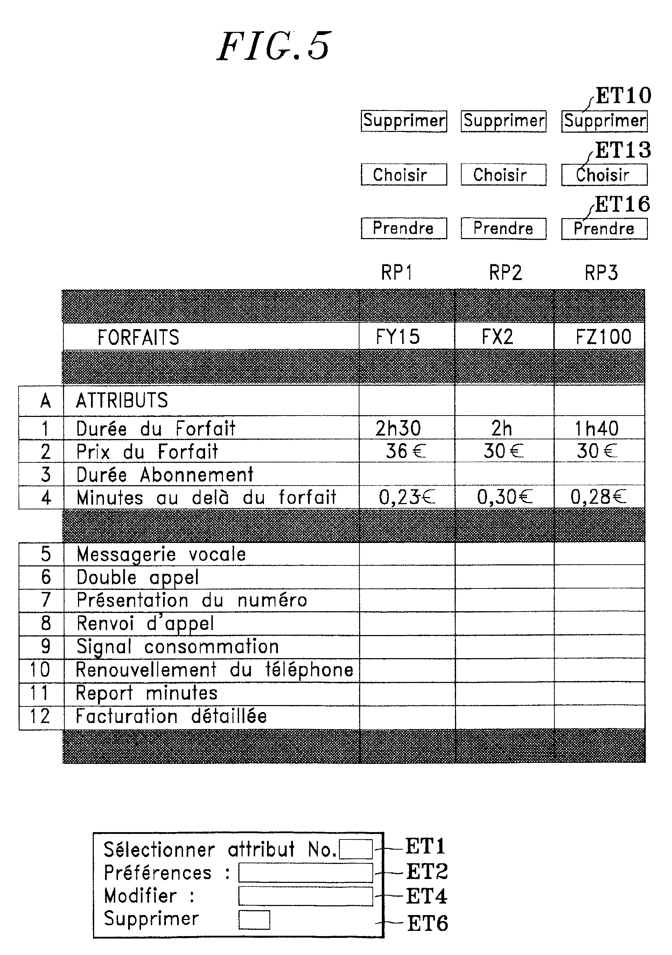

Le résultat de l'étape de décomposition et d'identification ET8 est montré par le tableau à la figure 5, dans lequel trois forfaits FY15, FX2 et FZ100 correspondent à des durées de forfait de l'ordre de 2 heures, à un prix du forfait de 30 € environ, et à un prix de la minute au-delà du forfait compris entre 0,20 et 0,30 € environ. L'usager peut ensuite prendre l'un de ces trois forfaits à l'étape ET16, en cliquant sur le bouton respectif "Prendre".

La figure 6 est un graphe montrant une répartition schématique de points représentatifs de produits P1 à PM définis chacun par deux attributs A1 et A2 compris entre des limites respectives $A1_{min}$ et $A1_{max}$ et $A2_{min}$ et $A2_{max}$. Ce graphe sert à illustrer notamment la première réalisation de décomposition de l'ensemble EP à l'étape ET8.

Dans cette première réalisation, la décomposition est effectuée selon un procédé de catégorisation de produits, dit "clustering" en anglais. Initialement, à l'étape E0, l'ensemble de produits restant au début de l'étape ET8 peut être le catalogue complet, ou une partie de celui-ci après exécution d'étapes ET11 et ET14. Il est supposé dans la suite que cet ensemble restant est désigné par EP et comporte M produits P1 à PM associés à un ensemble EA de N attributs.

Le procédé de décomposition selon cette première réalisation implémentée dans le serveur SR comprend treize étapes E1 à E13 montrées à la figure 7, sans aucune intervention de l'usager.

A la première étape E1, le moteur de recherche MR détermine I premiers produits comme représentants RP1 à RPI dans l'ensemble de produits EP. Les pivots peuvent être déterminés aléatoirement à l'étape E1, ou en fonction des ordres de préférence des valeurs des attributs sélectionnés par l'usager à des étapes ET2 et/ou ET4, ou supprimés à des étapes ET6, c'est-à-dire en fonction des ordres de préférence des valeurs des attributs dans l'ensemble EV.

Puis des variables de pivot PV1 à PVI sont mises égales aux représentants RP1 à RPI et l'indice m de produit est mis à zéro à l'étape E2. Un pivot est un produit autour duquel est définie une catégorie de produits dans les étapes suivantes.

Pour chaque produit Pm de l'ensemble restant EP, comme indiqué à l'étape E3, les étapes suivantes E4 à E6 sont exécutées par le moteur de recherche MR. L'étape E4 calcule les distances euclidiennes °Pm, PV1° à °Pm, PVI° entre le produit courant Pm et les pivots P1 à PI. Une distance euclidienne dépend des attributs en tant que coordonnées et constitue un paramètre de similarité entre le produit courant Pm et un pivot. L'étape E5 détermine la plus petite des distances euclidiennes calculées (min°Pm, PVi°) pour 1=i=I. Le moteur de recherche range alors le produit courant Pm dans une catégorie Ci dont le pivot PVi est le plus similaire au produit courant Pm, c'est-à-dire est le plus proche dans le graphe de la figure 6. La catégorie Ci constitue un groupe, dit "cluster". Les étapes E3 à E5 sont exécutées pour tous les produits P1 à PM de l'ensemble restant EP, comme indiqué à l'étape E6.

Après mise à zéro de l'indice i des catégories à l'étape E7, le moteur de recherche MR détermine, pour chaque catégorie Ci associée à un pivot PVi, le barycentre Bi parmi les produits rangés dans la catégorie Ci, comme indiqué aux étapes E8 et E9. L'étape E10 détermine le produit appartenant à la catégorie Ci qui est le plus similaire du barycentre Bi de manière à ce qu'il constitue un représentant RPi de la catégorie courante Ci. Le représentant correspond à la plus petite des distances euclidiennes entre le barycentre Bi et les produits appartenant à la catégorie Ci. Comme indiqué à l'étape E11, tous les représentants RP1 à RPI sont déterminés respectivement dans les catégories C1 à CI.

Puis à l'étape E12, le moteur de recherche MR compare les attributs des représentants RP1 à RPI qui viennent d'être déterminés à l'étape E10 avec les pivots PV1 à PVI déterminés en tant que représentants à des étapes précédentes E2 à E12 et mémorisés à l'étape E2. Les barycentres sont représentatifs des catégories et ne sont pas précisément des produits des catégories. Par conséquent la détermination des catégories ainsi que de leurs représentants est affinée jusqu'à ce qu'il y ait une convergence après plusieurs itérations des étapes E2 à E11. Lorsque les représentants RP1 à RPI deviennent quasiment constants à une incertitude prédéterminée e près à l'étape E12, le moteur de recherche identifie les derniers pivots déterminés comme les représentants RP1 à RPI des catégories C1 à CI à l'étape E13. Les I représentants ainsi déterminés sont affichés dans un tableau dans le terminal TE à l'étape ET8 pour que l'usager procède à une sélection de représentant de catégorie à l'étape ET9.

Selon une deuxième réalisation, la similarité de produits Pm et PVi appartenant à l'ensemble restant de produits EP reposent sur des notions de généralisation Gen(Pm, PVi) et de voisinage de produit Voi(Pm) pour le produit Pm.

La généralisation des produits du couple de produits Pm et PVi est constituée par le sous-ensemble de produits dans l'ensemble restant EP = {P1,... Ph,... Pk, ... Pm,... PM}. Les valeurs VAn(P1) à VAn(PM) de chaque attribut An des produits P1 à PM sont supérieures au minimum des valeurs d'attribut VAn(Pm) et VAn(PVi) des produits du couple et au plus égales à la valeur maximale $VAn_{max}$ de l'attribut An. Ceci est exprimé par :

$$Gen(Pm, PVi) = \{Pk \in EP \mid \forall n,$$

$$VAn(Pk) > min(VAn(Pm), VAn(PVi))\}.$$

La généralisation du couple (Pm, PVi) correspond ainsi aux produits appartenant au quadrant positif dans le graphe de la figure 6 ayant pour origine les attributs minimums des produits du couple.

Le voisinage d'un produit Pm est constitué par l'ensemble des généralisations auxquelles appartient le produit Pm, soit :

$$Voi(Pm) = \{Gen(Ph, Pk) \mid Ph \in EP, Pk \in EP, Pm \in Gen(Ph, Pk)\}$$

Le voisinage recouvre ainsi toutes les généralisations dont l'un des membres du couple est le produit Pm, et les éventuelles autres généralisations qui contiennent le produit Pm.

Le paramètre de similarité entre deux produits tels que le produit Pm et le pivot PVi, dépend du rapport entre l'intersection des voisinages du produit et du pivot exprimée par le nombre de généralisations qu'ils ont en commun, sur la réunion des voisinages du produit et du pivot exprimée par le nombre de généralisations énoncées dans les voisinages du produit et du pivot, soit :

$$Sim(Pm, PVi) = \frac{|Voi(Pm) \cap Voi(PVi)|}{|Voi(Pm) \cup Voi(PVi)|}$$

Plus l'intersection des voisinages est élevée, plus les deux produits sont similaires. Plus la réunion des voisinages est élevée et moins les deux produits sont similaires. Ce paramètre de similarité selon la deuxième réalisation est équivalent à la distance euclidienne selon la première réalisation.

Comme montré à la figure 8, la décomposition de l'ensemble restant selon la deuxième réalisation de l'étape ET8, implémentée dans le serveur SR, comprend des étapes E20 à E38, sans aucune intervention de l'usager. Les étapes E20, E21, E22, E28-E30, E34-E35 et E37-E39 sont respectivement analogues à celles E0, E1, E2, E4-E5, E9-E10 et E12-E13 incluses dans l'algorithme de la première réalisation montrée à la figure 7.

Ainsi l'étape E20 définit l'ensemble restant EP des produits P1,... Ph,... Pk,... Pm,... PM et l'ensemble EA des attributs A1,... An,... AN.

Le moteur de recherche MR détermine I premiers représentants PV1,... PVi,... PVI appartenant à l'ensemble restant de produits EP en général de manière aléatoire, ou en fonction des ordres de préférence des valeurs des attributs exprimés aux étapes ET2 à ET7.

Puis à une étape itérative E24, le moteur de recherche MR détermine le voisinage de chaque représentant RPi devenu pivot PVi, après avoir mis des variables PV1 à PVI égales aux représentants RP1 à RPI et l'indice i à zéro à l'étape E22 et augmenté d'une unité l'indice i à l'étape E23.

Lorsque tous les voisinages des pivots PV1 à PVI ont été déterminés à l'étape E25, le procédé passe à une étape E28 pour déterminer le voisinage Voi(Pm) de chaque produit Pm de l'ensemble restant EP autre que les pivots PV1 à PVI, d'une manière analogue à l'étape E24, après avoir mis à zéro et incrémenté d'une unité l'indice m aux étapes E26 et E27. En variante, lorsque le nombre de produits au catalogue EP est élevé, le moteur de recherche ne détermine à l'étape E28, comme à l'étape E24, les généralisations sur des couples de produits que d'une partie de l'ensemble restant EP pour chaque voisinage Voi(PVi), Voi(Pm) de chaque produit PVi, Pm de manière à augmenter la rapidité du procédé. Puis le moteur de recherche évalue les similarités entre le produit courant Pm et les pivots PV1 à PVI à l'étape E29. La plus grande de ces similarités est déterminée à l'étape suivante E30. Le moteur de recherche range alors le produit Pm dans une catégorie Ci qui est associée au pivot PVi qui présente la plus grande similarité avec le produit Pm.

Les étapes E27 à E31 sont itérées pour chaque produit Pm de l'ensemble EP, et le procédé passe de l'étape E31 à des étapes E32 à E35 pour déterminer un représentant pour chacune des catégories C1 à CI.

Aux étapes E32 et E33, l'indice i est mis à zéro et incrémenté d'une unité.

A l'étape E34, le moteur de recherche MR détermine pour chaque produit Pm appartenant à la catégorie Cm le voisinage du produit constitué par les généralisations relatives aux couples comportant chacun deux produits Ph et Pk dans la catégorie Ci. Lorsque tous les voisinages des produits de la catégorie ont été déterminés, l'étape E35 détermine le plus grand des voisinages pour les produits Pm appartenant à la catégorie Ci, c'est-à-dire détermine le représentant RPi correspondant au produit de la catégorie Ci ayant le plus grand nombre de généralisations. Si plusieurs produits dans la catégorie Ci ont un même nombre maximum de généralisations, l'un d'eux est choisi aléatoirement en tant que représentant, ou bien le premier qui se présente est choisi en tant que représentant.

Lorsque tous les représentants ont été déterminés, c'est-à-dire lorsque l'indice i a atteint la limite I à l'étape E36, le moteur de recherche vérifie à l'étape E37 si les représentants RP1 à RPI venant d'être déterminés sont quasiment identiques aux pivots PV1 à PVI déterminés et mémorisés en tant que représentants lors de l'itération précédente des étapes E22 à E37. Ainsi les étapes E22 à E37 sont réitérées jusqu'à ce que les représentants RP1 à RPI soient quasiment confondus avec les pivots PV1 à PVI à une incertitude e près. Finalement, à l'étape E38, le moteur de recherche MR identifie les derniers pivots déterminés dans la dernière itération des étapes E22 à E37, en tant que représentants RP1 à RPI des catégories C1 à CI. Les représentants ainsi déterminés sont affichés dans un tableau dans le terminal TE à l'étape ET8 de manière à ce que l'usager procède à une sélection de représentant de catégorie à l'étape ET9.

**Revendications**

1. Procédé d'assistance au choix d'un produit dans un ensemble électronique de produits (EP) mémorisé dans un moyen serveur (SR, BD) interagissant avec un terminal (TE), chaque produit (Pm) étant défini par plusieurs attributs (A1-AN), **caractérisé en ce qu'**il comprend la suite itérative des étapes suivantes :

   - décomposer (ET8) par le moyen serveur l'ensemble électronique de produits (EP) en un nombre prédéterminé de catégories de produits (C1-CI) afin que le serveur identifie des produits respectivement comme représentants (RP1-RPI) des catégories, et
   - sélectionner (ET9) dans le terminal l'un (RPi) des représentants pour commander l'exécution de l'une des étapes suivantes dans le moyen serveur si le représentant sélectionné n'est pas pris (ET16) :

      supprimer (ET10, ET11, ET12) la catégorie (Ci) correspondant au représentant sélectionné (RPi) dans l'ensemble de produits (EP) afin que le moyen serveur applique l'étape de décomposer (ET8) à l'ensemble de produits ainsi réduit si celui-ci n'est pas restreint à une catégorie non décomposable ; et

      choisir (ET13, ET14, ET15) la catégorie (Ci) correspondant au représentant sélectionné (RPi) pour réduire l'ensemble de produits (EP) à la catégorie correspondante afin que le moyen serveur applique l'étape de décomposer à la catégorie correspondante si celle-ci n'est pas restreinte au représentant sélectionné.

2. Procédé conforme à la revendication 1, selon lequel la suite itérative d'étapes comprend, en outre, les étapes suivantes :

   - sélectionner (ET1) dans le terminal (TE) l'un des attributs (An) pour exécuter l'une des étapes suivantes :

      ordonner (ET2, ET3) par ordre de préférence (OAn) les valeurs de l'attribut sélectionné (An) afin de décomposer l'ensemble restant de produits en un nombre de catégories (C1-CI) dépendant respectivement de l'ordre de préférence des valeurs de l'attribut ;

      modifier (ET4, ET5) un ordre de préférence (OAn) des valeurs de l'attribut sélectionné (An) afin de décomposer l'ensemble restant de produits en fonction de l'ordre de préférence modifié des valeurs de l'attribut ; et

      supprimer (ET6, ET7) un ordre de préférence (OAn) de valeurs déjà ordonnées de l'attribut sélectionné (An) afin de décomposer l'ensemble de produits restant en fonction notamment d'ordres de valeurs d'autres attributs antérieurement sélectionnés.

3. Procédé conforme à la revendication 2, comprenant un choix (ET1, ET1a) commandé depuis le terminal (TE) au serveur (SR) entre l'étape de sélectionner l'un des attributs selon la revendication 2 et une sélection aléatoire ou le plus sélectionné de l'un des attributs restants à sélectionner.

4. Procédé conforme à l'une quelconque des revendications 1 à 3, selon lequel l'étape de décomposer (ET8) par le moyen serveur (SR, BD) un ensemble de produits en un nombre prédéterminé de catégories (C1-CI) comporte une détermination (E1) de premiers produits comme pivots (PV1-PVI) dans l'ensemble de produits, une évaluation (E2-E6) de paramètres de similarité entre chaque produit (Pm) de l'ensemble et les pivots afin de déterminer le pivot le plus similaire audit chaque produit et ranger ledit chaque produit dans la catégorie (Ci) associée au pivot le plus similaire (PVi), et une détermination (E7-E11) du barycentre (Bi) dans chaque catégorie afin d'en déduire le produit le plus similaire du barycentre en tant que représentant (RPi) de la catégorie, et réitérer (ET12) l'évaluation de paramètres et la détermination de barycentre (E2-E11) tant que les représentants considérés comme pivots des catégories ne convergent pas à une incertitude prédéterminée près.

5. Procédé conforme à la revendication 4, selon lequel le paramètre de similarité entre chaque produit (Pm) et un pivot (PVi) est la distance euclidienne dépendant des attributs du produit et du pivot.

6. Procédé conforme à l'une quelconque des revendications 1 à 3, selon lequel l'étape de décomposer (ET8) par le moyen serveur (SR, BD) un ensemble de produits en un nombre prédéterminé de catégories (C1-CI) comporte une détermination (E21) de premiers produits comme pivots (PV1-PVI) dans l'ensemble de produits, une détermination (E22-E25) du voisinage de chaque pivot (PVi) par rapport à des couples (Pk, Pm) d'au moins une partie de l'ensemble de produits, une détermination (E26-E28) du voisinage de chaque produit (Pm) autre que les pivots par rapport à des couples (Ph, Pk) d'au moins une partie de l'ensemble de produits, une évaluation (E29-E30) de similarités entre chaque produit (Pm) de l'ensemble et les pivots (PV1-PVI) afin de déterminer le pivot le plus similaire audit chaque produit et ranger ledit chaque produit dans la catégorie (Ci) associée au pivot le plus similaire (PVi), et une détermination (E32-E36) du voisinage de chaque produit dans chaque catégorie afin d'en déduire le produit ayant le plus grand voisinage dans chaque catégorie (Ci) en tant que représentant (PPi) de la catégorie, et réitérer la détermination de voisinage de chaque pivot en tant que représentant, la détermination du voisinage de chaque produit, l'évaluation de similarités et la détermination du plus grand des voisinages dans chaque catégorie (E22-E37), tant que les représentants considérées comme pivots des catégories ne convergent pas à une incertitude prédéterminée près.

7. Procédé conforme à la revendication 6, selon lequel le voisinage d'un produit (Pm) dépend du nombre de généralisations de couples composés du produit et des autres produits de l'ensemble (EP), la généralisation de chaque couple étant un ensemble de produits dont les attributs sont respectivement supérieurs au minimum des attributs des produits du couple, et la similarité entre chaque produit et un pivot (PV1-PVI) dépend du rapport entre le nombre de généralisations énoncées dans les voisinages du produit et du pivot et le nombre de généralisations communes au produit et au pivot et le nombre des généralisations comprises dans le produit et le pivot.

8. Procédé conforme aux revendications 2 ou 3 à l'une quelconque des revendications 4 à 7, selon lequel la détermination (E1 ; E21) de premiers produits comme pivots (PV1-PVI) dépend d'ordres de préférence de valeurs d'attributs (A1-AN) des produits (P1-PM).

9. Système d'assistance au choix d'un produit dans un ensemble électronique de produits (EP) comprenant un moyen serveur (SR, BD) interagissant avec un terminal (TE) et ayant mémorisé l'ensemble électronique de produits, chaque produit (Pm) étant défini par plusieurs attributs (A1-AN), **caractérisé en ce qu'**il comprend :

- un moyen pour décomposer (ET8) l'ensemble électronique de produits (EP) en un nombre prédéterminé de catégories de produits (C1-CI)
- un moyen pour identifier des produits respectivement comme représentants (RP1-RPI) des catégories,
- un moyen répondant à une sélection (ET9) dans le terminal (TE) de l'un (RPi) des représentants si le représentant sélectionné n'est pas pris (ET16), pour supprimer (ET10, ET11, ET12) la catégorie (Ci) correspondant au représentant sélectionné (RPi) dans l'ensemble de produits (EP) afin que le moyen pour décomposer décompose (ET8) l'ensemble de produits ainsi réduit en d'autres catégories si celui-ci n'est pas restreint à une catégorie non décomposable ; et
- un moyen répondant à une sélection (ET9) dans le terminal (TE) de l'un (RPi) des représentants si le représentant sélectionné n'est pas pris (ET16), pour choisir (ET13, ET14, ET15) la catégorie (Ci) correspondant au représentant sélectionné (RPi) pour réduire l'ensemble de produits (EP) à la catégorie correspondante afin que le moyen pour décomposer décompose la catégorie correspondante en d'autres catégories si celle-ci n'est pas restreinte au représentant sélectionné.

**10.** Système conforme à la revendication 9, dans lequel le moyen pour décomposer comporte un moyen pour déterminer (E1) des premiers produits comme pivots (PV1-PVI) dans l'ensemble de produits, un moyen pour évaluer (E2-E6) des paramètres de similarité entre chaque produit (Pm) de l'ensemble et les pivots afin de déterminer le pivot le plus similaire audit chaque produit et ranger ledit chaque produit dans la catégorie (Ci) associée au pivot le plus similaire (PVi), et un deuxième moyen pour déterminer (E7-E11) le barycentre (Bi) dans chaque catégorie afin d'en déduire le produit le plus similaire du barycentre en tant que représentant (RPi) de la catégorie, le moyen pour évaluer et le deuxième moyen pour déterminer réitérant (ET12) l'évaluation de paramètres et la détermination de barycentre (E2-E11) tant que les représentants considérés comme pivots des catégories ne convergent pas à une incertitude prédéterminée près.

**11.** Système conforme à la revendication 9, dans lequel le moyen pour décomposer comporte un moyen pour déterminer (E21) des premiers produits comme pivots (PV1-PVI) dans l'ensemble de produits, un moyen pour déterminer (E22-E25) le voisinage de chaque pivot (PVi) par rapport à des couples (Pk, Pm) d'au moins une partie de l'ensemble de produits, un moyen pour déterminer (E26-E28) le voisinage de chaque produit (Pm) autre que les pivots par rapport à des couples (Ph, Pk) d'au moins une partie de l'ensemble de produits, un moyen pour évaluer (E29-E30) des similarités entre chaque produit (Pm) de l'ensemble et les pivots (PV1-PVI) afin de déterminer le pivot le plus similaire audit chaque produit et ranger ledit chaque produit dans la catégorie (Ci) associée au pivot le plus similaire (PVi), et un moyen pour déterminer (E32-E36) le voisinage de chaque produit dans chaque catégorie afin d'en déduire le produit ayant le plus grand voisinage dans chaque catégorie (Ci) en tant que représentant (PPi) de la catégorie, les moyens pour déterminer les voisinages et le moyen pour évaluer réitérant la détermination de voisinage de chaque pivot en tant que représentant, la détermination du voisinage de chaque produit, l'évaluation de similarités et la détermination du plus grand des voisinages dans chaque catégorie (E22-E37), tant que les représentants considérées comme pivots des catégories ne convergent pas à une incertitude prédéterminée près.

**12.** Système conforme à l'une quelconque des revendications 9 à 11, dans lequel le terminal (TE) est une borne installée dans un lieu public.

**13.** Système conforme à l'une quelconque des revendications 9 à 11, dans lequel le terminal (TE) et le moyen serveur (SR, BD) sont réunis en un terminal dédié.

*FIG.1*

FIGs.3,4,5

TE

FIG.2

RT

RESEAU DE
TELECOMMUNICATIONS

MR

FIG.2

SR

BD (EP,EA)

EP 1 239 394 A2

*FIG.2*

Catalogue de produits
EP={P1,...Pm,...PM}
EA={A1,...An,... AN}        ⊢E0
EV=φ

ET1

Sélection attribut An ?     non

oui        ET2

Ordonner par ordre de
préférence des valeurs
de An ?        non

oui        ET4

Modifier l'ordre de
préférence des valeurs
de An ?        non

oui        ET6

ET5—OAn=modif. OAn        Supprimer
valeur de An ?        non

ET3

EV=EV+OAn        oui

ET7—EV=EV−OAn        ET1a

oui    Ajouter automatiquement
An ?

−Décomposer en I
catégories C1,...Ci,...CI        ET8        non
−Identifier I représentants    (FIG.7 ou 8)
RP1,...RPi,...RPI ∈ EP

ET9

Sélection RPi de Ci ?

oui        ET10

Ci supprimée ?        non        ET13

oui        ET11        Ci choisie ?        non

EP=EP−Ci        oui        ET14

EP=Ci

non    EP=1 catégorie        ET16
décomposable ?        Ci=RPi ?    oui    RPi pris ?    non

oui        ET12        non    ET15        oui

FIN    ⊢ET17

# FIG.3

|  |  | RP1 | RP2 | RP3 |
|---|---|---|---|---|
| Supprimer | Supprimer | Supprimer ET10 | | |
| Choisir | Choisir | Choisir ET13 | | |
| Prendre | Prendre | Prendre ET16 | | |
|  | FORFAITS | FZ10 | FX5 | FX2 |
| A | ATTRIBUTS | | | |
| 1 | Durée du Forfait | 10h | 5h | 2h |
| 2 | Prix du Forfait | 92 € | 55 € | 30 € |
| 3 | Durée Abonnement | | | |
| 4 | Minutes au delà du forfait | | | |
| 5 | Messagerie vocale | | | |
| 6 | Double appel | | | |
| 7 | Présentation du numéro | | | |
| 8 | Renvoi d'appel | | | |
| 9 | Signal consommation | | | |
| 10 | Renouvellement du téléphone | | | |
| 11 | Report minutes | | | |
| 12 | Facturation détaillée | | | |

Sélectionner attribut No. 2 — ET1
Préférences : < <...< € — ET2
Modifier : — ET4
Supprimer — ET6

# FIG. 4

|  | | RP1 | RP2 | RP3 |
|---|---|---|---|---|
| | FORFAITS | FY15 | FX2 | FZ13 |
| A | ATTRIBUTS | | | |
| 1 | Durée du Forfait | 2h30 | 2h | 1h30 |
| 2 | Prix du Forfait | 36 € | 30 € | 24 € |
| 3 | Durée Abonnement | | | |
| 4 | Minutes au delà du forfait | | | |
| 5 | Messagerie vocale | | | |
| 6 | Double appel | | | |
| 7 | Présentation du numéro | | | |
| 8 | Renvoi d'appel | | | |
| 9 | Signal consommation | | | |
| 10 | Renouvellement du téléphone | | | |
| 11 | Report minutes | | | |
| 12 | Facturation détaillée | | | |

Supprimer   Supprimer   Supprimer   — ET10

Choisir   Choisir   Choisir   — ET13

Prendre   Prendre   Prendre   — ET16

Sélectionner attribut No. [4] — ET1
Préférences : [ <            € ] — ET2
Modifier : [            ] — ET4
Supprimer   [   ] — ET6

# FIG.5

| | | RP1 | RP2 | RP3 |
|---|---|---|---|---|
| | **FORFAITS** | FY15 | FX2 | FZ100 |
| A | ATTRIBUTS | | | |
| 1 | Durée du Forfait | 2h30 | 2h | 1h40 |
| 2 | Prix du Forfait | 36 € | 30 € | 30 € |
| 3 | Durée Abonnement | | | |
| 4 | Minutes au delà du forfait | 0,23€ | 0,30€ | 0,28€ |
| 5 | Messagerie vocale | | | |
| 6 | Double appel | | | |
| 7 | Présentation du numéro | | | |
| 8 | Renvoi d'appel | | | |
| 9 | Signal consommation | | | |
| 10 | Renouvellement du téléphone | | | |
| 11 | Report minutes | | | |
| 12 | Facturation détaillée | | | |

Supprimer   Supprimer   Supprimer ← ET10

Choisir   Choisir   Choisir ← ET13

Prendre   Prendre   Prendre ← ET16

| | |
|---|---|
| Sélectionner attribut No. ☐ | ← ET1 |
| Préférences : ▭ | ← ET2 |
| Modifier : ▭ | ← ET4 |
| Supprimer ☐ | ← ET6 |

*FIG.6*

*FIG.7*

E0 — Définir
EP ≤ {P1,...Pm,...PM}
EA = {A1,...An,...AN}

E1 — Déterminer
RP1 à RPI ∈ EP

ET8

E2 — PV1=RP1 à PVI=RPI
m=0

E3 — m=m+1

E4 — Calculer
‖Pm,PV1‖ à ‖Pm,PVI‖

E5 — Pour min ‖Pm,PVi‖ ⟹ Pm ∈ (Ci)min

E6 — m=M ? — non

oui

E7 — i=0

E8 — i=i+1

E9 — Déterminer barycentre Bi

E10 — RPI=min ‖Pm ∈ Ci,Bi‖

E11 — i=I ? — non

oui

E12 — ‖RPi-PVi‖<ε ∀i ? — non

oui

E13 — Identifier
RP1 à RPI

17

*FIG.8*

ET8

E20 — Définir
$EP \leqslant \{P1,...Ph,Pk,...Pm,...PM\}$
$EA = \{A1,...An,...AN\}$

E21 — Déterminer
$RP1$ à $RPI \in EP$

E22 — $PV1=RP1$ à $PVI=RPI$
$i=0$

E23 — $i=i+1$

E24 — Déterminer
$Voi(PVi)=\{Gen(Pk,Pm)\,|\,PVi \in Gen(Pk,Pm)\}$

E25 — $i=I$ ? — non

oui

E26 — $m=0$

E27 — $m=m+1$

E28 — Déterminer
$Voi(Pm)=\{Gen(Ph,Pk)\,|\,Pm \in Gen(Ph,Pk)\}$

E29 — Calculer
$Sim(Pm,PV1)$ à $Sim(Pm,PVI)$

E30 — Pour $max[Sim(Pm,PVi)]_1^I \Longrightarrow Pm \in (Ci)max$

E31 — $m=M$ ? — non

oui

E32 — $i=0$

E33 — $i=i+1$

E34 — pour chaque $Pm \in Ci$, déterminer :
$Voi(Pm)=\{Gen(Ph,Pk)\,|\,Ph$ et $Pk \in Ci, Pm \in Gen(Ph,Pk)\}$

E35 — $RPi=max[Voi(Pm \in Ci)]$

E36 — $i=I$ ? — non

oui

E37 — $\|RPi-PVi\|<\varepsilon \; \forall i$ ? — non

oui

E38 — Identifier $RP1$ à $RPI$

18